**Europäisches Patentamt**

**European Patent Office**

**Office européen des brevets**

(11) Publication number : **0 475 594 A1**

## (12) EUROPEAN PATENT APPLICATION

(21) Application number : **91307490.2**

(51) Int. Cl.⁵ : **C09D 7/00**

(22) Date of filing : **14.08.91**

(30) Priority : **12.09.90 US 581225**

(43) Date of publication of application :
**18.03.92 Bulletin 92/12**

(84) Designated Contracting States :
**AT BE DE ES FR GB IT NL**

(71) Applicant : **BETZ EUROPE, INC.**
**4636 Somerton Road**
**Trevose Pennsylvania 19047 (US)**

(72) Inventor : **Dulany, Michael Timothy**
**156 County Line Road**
**Souderton, Pennsylvania 18964 (US)**
Inventor : **Purnell, Deborah Lillian**
**4000 Presidential Blvd.**
**Philadelphia, Pennsylvania 19131 (US)**
Inventor : **Iezzi, Robert Aldo**
**33 Fox Sparrow Turn**
**Vincentown, New Jersey 08088 (US)**

(74) Representative : **W.P. Thompson & Co.**
**Coopers Building, Church Street**
**Liverpool L1 3AB (GB)**

(54) Treatment of water-borne paint and water-borne/solvent base paint blends.

(57) A process for facilitating the removal of oversprayed water-borne or blended water-borne/solvent based paints from the water collection system of a paint spray booth comprising adding to the water collection system one or more specific cationic polymers. Additionally, a clay compound or a silica compound is added to improve the detackification and flocculating performance characteristics of the process.

EP 0 475 594 A1

The present invention relates to paint spray booth technology and specifically to the process of treating oversprayed paint in the water collection systems of the spray booth. Problems pertaining to the use of water-borne paints and water-borne/solvent base paint blends are addressed.

During the applying of paint onto surfaces to be painted in a paint spray booth, the airborne oversprayed paint collected by water collection systems must be rendered non-sticky/non-tacky immediately after incorporation into the water collection system to prevent clogging of piping, pumps, and other components of the spray booth. In addition, the detackified paint must be easily removable from the water so the water can be recycled back into the paint spray booth. Yet another important consideration is that the chemical treatment must result in paint sludge which is high in solids (low moisture) to minimize sludge volume and disposal costs.

Detackification and associated treatment (i.e. separation from water, sludge dewatering) of solvent base paints has been a long-practised art. However, environmental concerns and regulations to reduce emissions such as, for example, volatile organic compounds, are leading to a dramatic increase in the use of water-borne paints, along with a corresponding decrease in solvent base paints.

The water-borne paints consist of a different chemistry from solvent base paints and consequently require different technologies for detackification and associated treatment. The primary difference is in the solvent, with water replacing most of the organic solvent typically used in solvent base paints. However, most water-borne paints still contain about 3 to 5% organic solvent. In addition to the difference in solvents, water-borne paints also often utilize different nonvolatile components (such as, for example, resins or pigments) to accommodate the difference in solvents. Due to the differences between solvent base and water-borne paints, different technologies are required for detackification and associated treatments.

An additional complicating factor is that some paint users utilize water-borne paints on some paint lines and solvent base paints on other lines. The water collection systems treating these different paints are usually mixed, causing water-borne and solvent borne paints to be treated in a common sump. Thus, an effective detackification and sludge treatment must not only treat water-borne alone, but water-borne/solvent base blends.

The treatment of water-borne paint oversprays is typified in US-A- 4 096 061 (Brennan). Taught therein is a treatment process consisting of adding to the water wash a cationic polymer flocculant in combination with an anionic polymer, such as polyacrylic acid, polymaleic anhydride and copolymers of maleic anhdride with an olefin.

As previously mentioned, numerous paint spray booth systems will contain both water-borne and solvent based paints in their sumps. US-A- 4 130 674 (Roberts et al) addresses this particular problem by disclosing a treatment program wherein a long carbon chain $C_8$ to $C_{10}$) surface active nitrogen derivative is added to either a polyvalent metal salt or a nonionic or anionic high molecular weight polymer, such as polyamines or monopolymers of acrylic acid. A further refinement in the treatment of dual paint systems may be seen in US-A- 4 888 386 (Huang et al). In that case, the patentees teach treating the water wash system with a combination of a melamine-formaldehyde polymer, polyvinyl alcohol and a styrene-acrylate copolymer.

It has now been found possible to treat paint spray booth water collection systems by effectively detackifying and flocculating water-borne paints and water-borne/solvent base blended paints so as to facilitate the formation of a removable sludge that is high in solids and low in volume.

According to the present invention there is provided a process for detackifying and flocculating oversprayed water-borne paint contained in a water collection system of a paint spray booth which comprises adding to its water collection system

(a) at least one cationic polymer selected from:

polydiallyl dimethyl ammonium chloride,

a condensation product of diethylenetriamine plus adipic acid plus epichlorohydrin,

hexamethylenediamine still bottoms plus ethylene dichloride,

a condensation product of dimethylamine plus ethylene diamine, and

a condensation product of dimethylamine plus epichlorohydrin; and

(b) a clay compound or a silica compound.

The present invention also provides a process for detackifying and flocculating oversprayed blended water-borne/solvent based paint contained in a water collection system of a paint spray booth which comprises adding to the water collection system

(a) at least one cationic polymer selected from:

polydiallyl dimethyl ammonium chloride,

a condensation product of diethylenetriamine plus adipic acid plus epichlorohydrin,

hexamethylenediamine still bottoms plus ethylene dichloride,

a condensation product of dimethylamine plus ethylene diamine, and

a condensation product of dimethylamine plus epichlorohydrin; and

(b) a clay compound or a silica compound.

The present invention comprises adding certain cationic polymers to a paint spray booth wash water system. Although these polymers are effective by themselves, treatment efficacy is enhanced by combining the polymers with other compounds, namely clay compounds and silica compounds.

The cationic polymers found to be effective may be described as having a low to medium molecular weight and a high charge density. They may be crosslinked or linear and are either condensation or addition polymers.

The polymers having the desired performance characteristics are:

| Polymer Type | Description |
| --- | --- |
| I | Polydiallyl dimethyl ammonium chloride (for example, a material available from CPS Chemical Company, as Ageflex). |
| II | Condensation product of diethylene-triamine plus adipic acid plus epichlorohydrin, (for example, a material available from Betz Laboratories, Inc. as polymer 1175). |
| III | Condensation product of hexamethylene-diamine still bottoms plug ethylene dichloride (for example, a material available from Monsanto, as Santofloc F). |
| IV | Condensation product of dimethylamine plus ethylene diamine (for example, a material available from Betz Laboratories, Inc. as Polymer 1195). |
| V | Condensation product of dimethylamine plus epichlorohydrin (for example, a material available from American Cyanamid, as Magnifloc 581C). |

The above polymers have been found to be effective either independently or when blended with another of the listed polymers.

Due to the particularly troublesome nature of water-borne and water-borne/solvent based paints it is necessary to combine the cationic polymer(s) with other compounds, namely silica compounds such as water soluble silicates, for example, sodium disilicate and sodium metasilicate, or clay compounds, such as, for example, sodium bentonite.

As the present invention is practised, an aqueous solution containing the cationic polymer and a solution containing the silica compound or the clay compound are added, sometimes as a single solution or together, but preferably separately, to the paint spray booth recirculating water. The solutions can be admitted to the paint spray booth system at various locations including: the pump, upstream from the pumps, in the sump or at any other advantageous location.

The aqueous solutions prepared in accordance with the present invention may be either shot fed or continuously fed to the paint spray booth water system. The operable dosage rate of the cationic polymer will generally be in the range of 0.01 to 20% active polymer, based on overspray paint (BOP). In general, the dosage rate of the silica compound or clay compound will be in the range of 0.01 to 15%, based on paint.

The present invention will now be further illustrated with reference to, but is in no manner limited to, the following Examples.

A standard jar test procedure is used to determine the operable and proper treatment program and dosage level. The general procedure is to add 100 ml of tap water to a 120 ml jar. The desired treatment is added and the bottle is capped and shaken to mix the contents and coat the internal surfaces of the jar with the treated water. One ml of paint is added to the jar. After 30 seconds of vigorous shaking the contents of the jar are observed.

The overall performance of the treatment program is evaluated based on three characteristics: detackification, flocculation and water clarity. The overall performance rating indicated for each treatment is a subjective composite based upon parameters established for each of these three characteristics. Water clarity and floc formation are based upon visual observations of the contents of the jar after shaking. Detackification performance is determined by inserting a wooden tongue depressor into the jar after shaking, removing it and observing the tackiness of the paint.

| Overall Rating | Detackification | Flocculation | Water Clarity |
|---|---|---|---|
| Excellent | Paint particles do not adhere to jar or depressor surfaces. | Large floc, 100% floats on surface | Clear |
| Good | Paint specks form on <1% of exposed surfaces. | Medium-Large floc, >80% floats | Slightly cloudy |
| Fair | Paint globules adhere to <10% of surfaces. Sludge may be smeary, but not tacky. | Small floc, 50-80% floats | Cloudy |
| Poor | Paint coats depressor; paint globules are slightly tacky or smeary. | no or small flocs, most dispersed | Turbid |

The following Examples contain various types of paints as indicated. Treatment chemicals, concentrations and efficacy ratings are shown in each Table correlating with the type of paint treated. The polymers utilized are numbered corresponding to the descriptions previously defined herein.

EXAMPLE 1

Water-borne paints were tested. Samples were acquired from PPG under the "Aquabase" line of paints.

### TABLE I

| Treatment | Concentration (% BOP) | Overall Performance Rating |
|---|---|---|
| 1) Polymers I (54%) & II (36%), remainder water * | 4% | Fair |
| 2) Polymer IV | 4 - 5% | Fair |
| 3) Polymer IV | 12% | Fair |

\* added after paint is present

EXAMPLE 2

The paint used in this Example consisted of a blend of a water based white and solvent based clear coat (3:1 ratio) taken from a midwest (U.S.A.) automotive assembly facility.

### TABLE II

| Treatment | Concentration (%BOP) | Overall Performance Rating |
|---|---|---|
| 1) Polymers IV (50%) & V (50%) + sodium disilicate | 4 - 5% 1600 (ppm) | Excellent |
| 2) Sodium Bentonite clay + Polymer I | 15 - 25% 10% (Based on clay) | Good |

EXAMPLE 3

The paint treated in this Example was a blend of a water-borne white plus a solvent based clear coat and was acquired from a midwest (U.S.A.) automotive assembly facility.

### TABLE III

| Treatment | Concentration (%BOP) | Overall Performance Rating |
|---|---|---|
| 1) Polymers IV (50%) & V (50%) + sodium disilicate | 3.0% 1600 (ppm) | Good |

EXAMPLE 4

The following results were from tests conducted utilizing a water-borne paint similar to Example 1.

## TABLE IV

| Treatment | Concentration (%BOP) | Overall Performance Rating |
|---|---|---|
| 1) Polymers I (54%) & II (36%), remainder water | 4% | Excellent |
| 2) Polymers I (54%) & II (36%) remainder water, + sodium disilicate | 4% / 1600 (ppm) | Good |
| 3) Polymer III | 4 - 5% | Good |
| 4) Polymers IV (50%) & V (50%) + sodium disilicate | 4 - 6% / 1600 (ppm) | Good |
| 5) Polymers I (25%) & V (75%) + sodium disilicate | 4 - 6% / 1600 (ppm) | Good |

EXAMPLE 5

The following results were from tests conducted utilizing a water-borne/solvent based paint blend similar to Example 3.

## TABLE V

| Treatment | Concentration (% BOP) | Overall Performance Rating |
|---|---|---|
| 1) Polymers IV (50%) & V (50%) + sodium disilicate | 10% / 8% | Good |
| 2) Polymers I (54%) & II (36%) remainder water, + sodium disilicate | 6% / 1600 (ppm) | Good |
| 3) Polymers I (54%) & II (36%), remainder water, + sodium disilicate | 10% / 20% | Good |

## Claims

1. A process for detackifying and flocculating oversprayed water-borne paint contained in a water collection system of a paint spray booth which comprises adding to the water collection system

(a) at least one cationic polymer selected from:
polydiallyl dimethyl ammonium chloride,
a condensation product of diethylenetriamine plus adipic acid plus epichlorohydrin,
hexamethylenediamine still bottoms plus ethylene dichloride,
a condensation product of dimethylamine plus ethylene diamine, and
a condensation product of dimethylamine plus epichlorohydrin; and
(b) a clay compound or a silica compound.

2. A process for detackifying and flocculating oversprayed blended water-borne/solvent based paint contained in a water collection system of a paint spray booth which comprises adding to the water collection system
(a) at least one cationic polymer selected from:
polydiallyl dimethyl ammonium chloride,
a condensation product of diethylenetriamine plus adipic acid plus epichlorohydrin,
hexamethylenediamine still bottoms plus ethylene dichloride,
a condensation product of dimethylamine plus ethylene diamine, and
a condensation product of dimethylamine plus epichlorohydrin; and
(b) a clay compound or a silica compound.

3. A process according to claims 1 or 2, wherein the cationic polymer is added to the water collection system so as to maintain a concentration of from about 0.01% to about 20% active polymer, based on paint.

4. A process according to any of claims 1 to 3, wherein the cationic polymer is added separately to the water collection system from the clay compound or the silica compound.

5. A process according to any of claims 1 to 4, wherein the clay compound or the silica compound is added in a concentration of from 0.01 to 15%, based on paint.

6. A process according to any of claims 1 to 5, wherein the clay compound is sodium bentonite.

7. A process according to any of claims 1 to 5, wherein the silica compound is a water soluble silicate.

**European Patent Office**

## EUROPEAN SEARCH REPORT

Application Number

EP 91 30 7490

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 440 647 (WALTER J. PUCHALSKI)<br>* column 2, line 61 – line 68 *<br>* column 3, line 11 – line 17 *<br>* column 3, line 26 – line 34 *<br>* examples 1,3 *<br>* claims 1-3 *<br>--- | 1,3,5,7 | C09D7/00 |
| X | US-A-4 863 615 (CLAUDIA V. STENGER)<br>* claim 1 *<br>* column 3, line 1 – line 5 *<br>--- | 1,2 | |
| A | US-A-4 686 047 (JOSEPH B. AROTS)<br>* abstract *<br>* column 4, line 32 – line 35 *<br>--- | 1,5,6 | |
| A | US-A-4 913 825 (DAVID B. MITCHELL)<br>* claim 1 *<br><br>----- | 1 | |
| | | | TECHNICAL FIELDS SEARCHED (Int. Cl.5 )<br><br>C09D |

The present search report has been drawn up for all claims

| Place of search | Date of completion of the search | Examiner |
|---|---|---|
| THE HAGUE | 20 DECEMBER 1991 | GIRARD Y.A. |